Europäisches Patentamt

European Patent Office

Office européen des brevets

(11) Publication number: **0 303 393**
**A1**

## EUROPEAN PATENT APPLICATION

(21) Application number: 88307169.8

(51) Int. Cl.⁴: **C10G 11/18**

(22) Date of filing: 03.08.88

(30) Priority: **12.08.87 US 84243**
**12.08.87 US 84242**

(43) Date of publication of application:
**15.02.89 Bulletin 89/07**

(84) Designated Contracting States:
**BE DE FR GB IT NL**

(71) Applicant: **MOBIL OIL CORPORATION**
**150 East 42nd Street**
**New York New York 10017(US)**

(72) Inventor: **Child, Jonathan Edward**
**27 Long Bow Drive**
**Sewell New Jersey 08080(US)**

(74) Representative: **Colmer, Stephen Gary**
**Patent Department c/o Mobil Services**
**Company Limited Mobil Court 3 Clements**
**Inn**
**London WC2A 2EB(GB)**

(54) NOx control in fluidized bed combustion process.

(57) In a fluidized combustion process for removing coke from a particulate material, the material is fluidized in a first zone and a second zone and coke on the particulate material is burned in the first zone to produce a combustion gas containing CO, the conditions in the first zone being such that the CO can convert $NO_x$ in the combustion gas to nitrogen. The combustion gas is then passed from the first zone to the second zone and a CO combustion promoter is selectively provided in the second zone to convert CO to $CO_2$.

## NOₓ CONTROL IN FLUIDIZED BED COMBUSTION PROCESS

The invention relates to a method for controlling nitrogen oxide emissions from flue gases generated during fluidized bed combustion, and especially during regeneration of a spent FCC catalyst.

Catalytic cracking of hydrocarbons is carried out in the absence of externally supplied $H_2$, in contrast to hydrocracking, in which $H_2$ is added during the cracking step. An inventory of particulate catalyst is continuously cycled between a cracking reactor and a catalyst regenerator. In the fluidized catalytic cracking (FCC) process, hydrocarbon feed contacts catalyst in a reactor at 425°C-600°C, usually 460°C-560°C. The hydrocarbons crack, and deposit some carbonaceous hydrocarbons or coke on the catalyst. The cracked products are separated from the coked catalyst, which is stripped of volatiles, usually with steam, and then regenerated. In the catalyst regenerator, the coke is burned from the catalyst with oxygen containing gas, usually air, thereby restoring catalyst activity and simultaneously heating the catalyst to, e.g., 500°C-900°C, usually 600°C-750°C. Flue gas formed by burning coke in the regenerator may be treated for removal of particulates and for conversion of carbon monoxide, after which the flue gas is normally discharged into the atmosphere.

Most FCC units now use zeolite-containing catalyst having high activity and selectivity. These catalysts work best when the amount of coke on the catalyst after regeneration is relatively low. It is desirable to regenerate zeolite catalysts to as low a residual carbon level as is possible. It is also desirable to burn CO completely within the catalyst regenerator system to conserve heat and to minimize air pollution. Heat conservation is especially important when the concentration of coke on the spent catalyst is relatively low as a result of high catalyst selectivity. Among the ways suggested to decrease the amount of carbon on regenerated catalyst and to burn CO in the regenerator is to add a CO combustion promoter metal to the catalyst or to the regenerator. Metals have been added as an internal component of the cracking catalyst and as a component of a discrete particulate additive, in which the active metal is associated with a support other than the catalyst. U.S. Pat. No. 2,647,860 adds 0.1-1 weight percent chromic oxide to a cracking catalyst to promote combustion of CO. U.S. Pat. No. 3,808,121 introduces relatively large-sized particles containing CO combustion-promoting metal into a cracking catalyst regenerator. The circulating particulate solids inventory, of small-sized catalyst particles, cycles between the cracking reactor and the catalyst regenerator, while the combustion-promoting particles remain in the regenerator. Oxidation-promoting metals such as cobalt, copper, nickel, manganese and copper-chromite, impregnated on an inorganic oxide such as alumina, are disclosed.

U.S. Pat. No. 4,072,600 and No. 4,093,535 teach the use of combustion-promoting metals such as Pt, Pd, Ir, Rh, Os, Ru and Re in cracking catalysts in concentrations of 0.01 to 50 ppm, based on the total catalyst inventory.

Some cracking operations using CO combustion promoters generate nitrogen (NOₓ) in the regenerator flue gas. It is difficult in a catalyst regeneration system to completely burn coke and CO in the regenerator without increasing the NOₓ content of the regenerator flue gas.

Although many refiners have recognized the problem of NOₓ emissions from FCC regenerators, the solutions proposed have not been completely satisfactory. The approaches taken so far have generally been directed to special catalysts which will inhibit the formation of NOₓ in the FCC regenerator, or to process changes which reduce NOₓ emissions from the regenerator.

Recent catalyst patents include U.S. 4,300,997 and its division U.S. 4,350,615, both directed to the use of Pd-Ru CO-combustion promoter. The bi-metallic CO combustion promoter is reported to convert CO to $CO_2$, while minimizing the formation of NOₓ.

Another catalyst development is disclosed in U.S. 4,199,435 which suggests steam treating a conventional metallic CO combustion promoter to decrease NOₓ formation without excessive impairment of the CO combustion activity of the promoter.

U.S. 4,313,848 teaches countercurrent regeneration of spent FCC catalyst, without backmixing, to minimize NOₓ emissions.

U.S. 4,309,309 teaches the addition of a vaporizable fuel to the upper portion of a FCC regenerator to minimize NOₓ emissions. Oxides of nitrogen formed in the lower portion of the regenerator are reduced in the reducing atmosphere generated by burning fuel in the upper portion of the regenerator.

U.S. 4,235,704 suggests excessive CO combustion promoter causes NOₓ formation, and calls for monitoring the NOₓ content of the flue gases, and adjusting the concentration of CO combustion promoter in the regenerator based on the amount of NOₓ in the flue gas.

The approach taken in U.S. 4,542,114 is to minimize the volume of flue gas by using oxygen rather than air in the FCC regenerator, with consequent reduction in the amount of flue gas produced.

In addition to the above patents, there are many patents on treatment of flue gases containing $NO_x$. U.S. 4,521,389 and U.S. 4,434,147 disclose adding $NH_3$ to $NO_x$ containing flue gas to catalytically reduce the $NO_x$ to nitrogen.

None of the approaches described above provides the perfect solution, in that they may require extensive rebuilding of the FCC regenerator or involve the use of costly and complex bi-metallic combustion promoters. The object of the present invention is therefore to provide an improved process for reducing $NO_x$ emissions from fluid bed combustion systems, particularly FCC regenerators.

Accordingly, the invention resides in a fluidized combustion process for removing coke from particulate material comprising the steps of:

a) fluidizing the particulate material in a first zone and second zone;

b) burning coke on the particulate material in the first zone to produce a combustion gas containing CO, the conditions in the first zone being such that the CO can convert $NO_x$ in the combustion gas to nitrogen; and

c) passing the combustion gas from the first zone to the second zone and selectively providing a CO combustion promoter in the second zone to convert CO to $CO_2$.

In one preferred embodiment, the first and second zones are defined by lower and upper portions respectively of a single, fluidized bed.

In a further preferred embodiment, the first zone is a first dense fluidized bed and the second zone is a dilute phase transport riser which carries the particulate material and the combustion products from the first zone to a second dense fluidized bed above the first bed.

Most preferably, the first and second zones from part of the regeneration system of a fluidized catalytic cracking unit.

The invention can be used in any fluidized bed combustion process such as fluidized bed coal combustion and burning low BTU gas in a fluidized bed. The present process is, however, especially useful in FCC regenerators and will therefore be described with reference to this preferred application.

Any conventional FCC feed can be used with the process of the invention and in fact the present process makes it possible to use charge stocks which are relatively high in nitrogen content, and which otherwise might result in unacceptable $NO_x$ emissions in conventional FCC units. The feeds may range from the typical, such as petroleum distillates or residual stocks, either virgin or partially refined, to the atypical, such as coal oils and shale oils. The feed frequently will contain recycled hydrocarbons, such as light and heavy cycle oils which have already been subjected to cracking.

Any conventional FCC catalyst may be used. The catalyst can be 100% amorphous, but preferably includes some zeolite in a porous refractory matrix such as silica-alumina, clay, or the like. The zeolite is usually 5-35 wt.% of the catalyst, with the rest being matrix. Conventional zeolites include X and Y zeolites, with ultra stable, or relatively high silica Y zeolites being preferred. Dealuminized Y (DEAL Y) and ultrahydrophobic Y (UHP Y) zeolites may be used. The catalyst may also contain one or more shape selective zeolites, i.e., those having a Constraint Index of 1-12, and typified by ZSM-5.

Relatively high silica zeolite based catalysts are preferred for use in the present invention, since they withstand the high temperatures usually associated with complete combustion of CO to $CO_2$ within the FCC regenerator.

Conventional FCC reactor conditions may be used. These conditions include catalyst/oil ratios of 0.5:1 to 15:1 and preferably 3:1 to 8:1, and a catalyst/oil contact time of 0.5-50 seconds, and preferably 1-20 seconds.

The process of the invention is of course particularly concerned with the regeneration system of an FCC unit and can be used with either a single dense fluidized bed regenerator, such as a swirl-style regenerator, or with a multi-stage regenerator, such as the minimum inventory FCC regenerator described in, for example, U.S. Patent Nos. 3,893,812 and 4,197,189. The operating conditions within the regenerator can be within the broad ranges normally found to be suitable for FCC regeneration, especially those operating with substantially complete combustion of CO to $CO_2$ within the regeneration zone. Suitable and preferred operating conditions are

| | Broad | Preferred |
|---|---|---|
| Temperature, °F(°C) | 1100-1700(540-930) | 1150-1400(620-760) |
| Catalyst Residence Time, Seconds | 40-3600 | 70-600 |
| Pressure, atmospheres(kPa) | 1-10(100-1000) | 2-5(200-500) |
| % Stoichiometric $O_2$ | 100-150 | 100-120 |

In the process of the invention, as applied to an FCC regeneration system, coked catalyst from the FCC reactor is fluidized in a first zone, which may be the lower portion of a single fluidized bed or may be the first dense bed coke combustor of a multi-stage regenerator. Air or oxygen is supplied to the first zone to burn off at least part of the coke on the catalyst and produce partially regenerated catalyst and combustion gas, which then flow to a less dense second zone of the regenerator. The conditions within the first zone are maintained such that the coke burns to produce at least CO which is then able to convert to nitrogen any $NO_x$ present in the combustion gas.

In the second regenerator zone, which may be either the upper portion of a single bed regenerator or a dilute phase transport riser which, in a multi-stage regenerator, connects the first bed to a second fluidized bed, the regeneration is continued under conditions which favor conversion of CO to $CO_2$.

The present process also requires the selective addition of CO combustion promoter to the less dense second combustion zone. The use of such promoter in FCC regenerators is of course well known from, for example, U.S. Patent Nos. 4,072,600 and 4,235,754. From 0.01 - 100 ppm Pt metal or enough other metal to give the same CO oxidation, may be used with good results. Very good results are obtained with as little as 0.1 to 10 wt. ppm platinum, preferably 0.1 - 5 wt. ppm platinum, present on the catalyst in the unit. Pt can be replaced by other metals, but usually more metal is then required. An amount of promoter which would give a CO oxidation activity equal to 0.3 to 3 wt. ppm of platinum is preferred.

CO combustion promoter can also be present in the first combustion zone, although it is of course necessary to ensure that at least some CO remains for conversion of the $NO_x$. Thus the majority of the CO combustion promoter, preferably 60 - 90% by weight, should be in the second zone of the regenerator, which can be achieved in a number of ways.

For example, the CO combustion promoter may be provided on a particulate support which is readily segregable from the FCC catalyst, which has about the same density as the FCC catalyst, but is of a smaller particle size than the FCC catalyst, so that it tends to congregate in the upper second zone of the regenerator.

It is also possible to use a Pt (or other CO combustion promoter metal) rich additive on particles as large as or larger than the conventional FCC catalyst. The Pt-rich additive should then have a lower density than the conventional FCC catalyst or be supported by mechanical means in the upper portion of the FCC regenerator dense bed. Preferably, the promoter particles have a density below 0.5 $g/cm^3$, such as about 0.4 $g/cm^3$.

It is also possible to physically implant the CO combustion promoter within the upper portion of the dense bed of the FCC regenerator. For example, platinum wires, platinum impregnated honeycombs or rods, could be placed in the upper portion of the FCC regenerator dense bed, provided they do not impair good fluidization within the FCC regenerator.

The invention will now be more particularly described with reference to the accompanying drawings, in which:

Figure 1 is a simplified view of a single bed FCC regenerator employing a process according to a first embodiment of the present invention;

Figure 2 is a simplified view of a single bed FCC regenerator employing a modification of the first embodiment;

Figure 3 is a schematic representation of a multi-stage FCC regenerator employing a process according to a second embodiment of the present invention;

Figure 4 is a schematic illustration of a multi-stage FCC regenerator employing a process according to a modification of the second embodiment; and

Figure 5 is a graph showing how $NO_x$ emissions vary as a function of relative Pt level of an FCC catalyst.

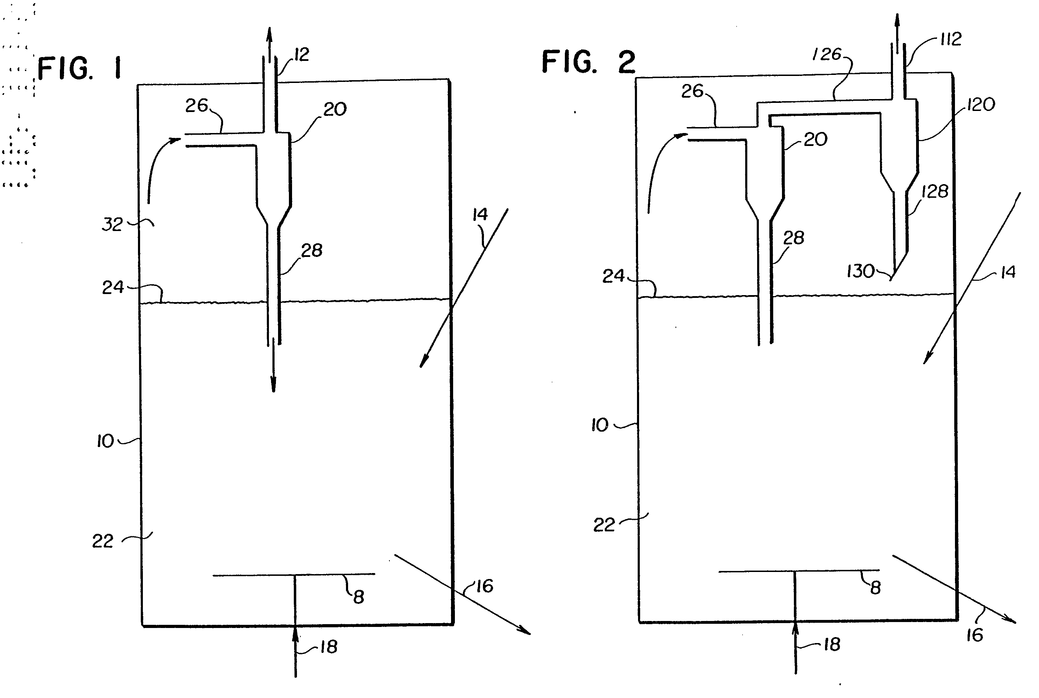

Referring to Figure 1, there is shown a conventional single bed FCC regenerator 10 which can be used in the practice of the present invention. First the conventional operation of the FCC regenerator will be discussed, then the process of the invention will be discussed.

Spent catalyst is added to regenerator 10 via line 14. Oxygen containing gas, preferably air, is added via line 18 to a conventional air distributor 8 in the lower portion of the regenerator. Coke is burned to CO and $CO_2$ in the dense bed 22 of the regenerator. Spent catalyst 14 will usually have a CO combustion promoter, e.g., an additive of alumina with 1-1000 wt ppm Pt, present in an amount sufficient to add the desired amount, typically 0.1 to 10 ppm Pt to the FCC catalyst inventory. Most of the CO formed in the dense bed is rapidly burned to $CO_2$ in the dense bed. Regenerated catalyst is withdrawn via line 16 for reuse within a conventional FCC reactor, not shown.

The dense bed of catalyst 22 has an upper level 24. Products of combustion, typically $NO_x$, $SO_x$, $CO_2$, minor amounts of CO, minor amounts of oxygen, and inserts such as nitrogen, pass from dense bed 22 into a dilute phase 32 above the bed 22. A significant amount of catalyst fines is usually entrained in the effluent gas, which is therefore passed through an inlet 26 of a cyclone 20 to recover entrained catalyst and catalyst fines so that relatively solids-free flue gas can be discharged via line 12. Entrained catalyst and fines removed by the cyclone 20 are discharged through dipleg 28 back into the dense bed of catalyst 22.

Although only a single cyclone is shown in Figure 1, commercially most FCC regenerators have a number of cyclones. Usually there are two sets of cyclones, primary and secondary. A typical FCC regenerator might have eight primary cyclones, each discharging into a secondary cyclone, resulting in 16 cyclones in all. In addition, third or even higher stage cyclones can be used to recover more catalyst and catalyst fines for return to the FCC regenerator. Electrostatic precipitators, porous stainless steel filters, and similar devices can all be used to recover small sized particles and return them to the FCC regenerator.

The process of the present invention is implemented in the conventional FCC regenerator shown in Fig. 1 by adding a CO combustion promoter which tends to rise to the upper less dense zone 24 of the regenerator dense bed. For example, addition of somewhat smaller sized combustion particles, perhaps in conjunction with use of coarser FCC catalyst, will result in a net migration of CO combustion promoter to the upper portions of the FCC regenerator.

Because of the segregation of CO combustion promoter within the upper portions of the FCC regenerator dense bed, there is less CO combustion promoter in the bottom of the regenerator dense bed, permitting significant concentrations of CO to be present. Although not all of the carbon monoxide is afterburned to $CO_2$ within the lower portion of the dense bed of the regenerator, most of the coke to be removed is burned to CO and $CO_2$ in this lower portion of the regenerator. As the coke burns, the nitrogen compounds contained in the coke are burned to $NO_x$. The $NO_x$ formed reacts with the CO to form $CO_2$ and $H_2O$. Much of the remaining CO is combusted to $CO_2$ within the upper portions of the regenerator, where most of the CO combustion promoter is located.

Further modifications can also be made, e.g., restricting somewhat the amount of air that is added to the bottom of the dense bed regenerator, and optionally adding additional combustion air to the upper portion of the dense bed. This helps ensure that there is a reducing atmosphere in the lower portion of the bed and an oxidizing atmosphere in the upper portion of the regeneration bed. Most of the combustion air should be added to the bottom of the dense bed. When split air addition is practiced, from 1-50% of the air can be added to the upper portion of the bed, preferably 3-30%.

A drawback to the approach of Fig. 1 is that reliance solely upon very small particles of CO combustion promoter, or use of a low density CO combustion promoter additive results in somewhat higher losses of CO combustion promoter. This is because a certain portion of the promoter is lost with the flue gas, despite the use of a cyclone separator. Another minor problem with the use of a dipleg 28, as shown in the figure, is that a significant amount of the entrained CO combustion promoter returned via the dipleg is swept along with regenerated catalyst back to the FCC reactor, via line 16. Moreover, the increased concentration of CO promoter near interface 24 may not be achieved to the extent desired.

Fig. 2 shows some modifications to the FCC regenerator which aid in establishing an increased concentration of CO combustion promoter in the upper portion of the FCC regenerator dense bed.

In the modification shown in Figure 2, a secondary cyclone 120 is provided which receives flue gas via exhaust line 126 from primary cyclone 20. After passage through the secondary cyclone 120, the flue gas, with a substantially reduced content of entrained catalyst and the CO combustion promoter, is removed from the system via line 112. Catalyst, catalyst fines, and CO combustion promoter are discharged from cyclone 120 via dipleg 128 to the upper portion of the dense bed 22. A flapper valve 130 is provided at the bottom of dipleg 128 to allow catalyst particles to leave dipleg 128, but prevent flue gas entering the dipleg.

Further modifications of the design shown in Fig. 1 or in Fig. 2 can be made to permit selective recovery of catalyst fines from the primary cyclone exhaust. Extra stages of cyclones, bag filters, porous stainless steel filters, electrostatic precipitators and the like can be used to recover, and preferably recycle promoter to the dense bed, preferably the upper portion of it. Selective removal of catalyst fines, with a high concentration of CO combustion promoter, also permits regeneration or recovery of the promoter. This can be economically advantageous when platinum or other expensive noble metals are used as CO combustion promoters. It also facilitates rapid change in promoter composition if a refiner wants to go from a mono-metallic promoter to bi-metallic promoter or the reverse.

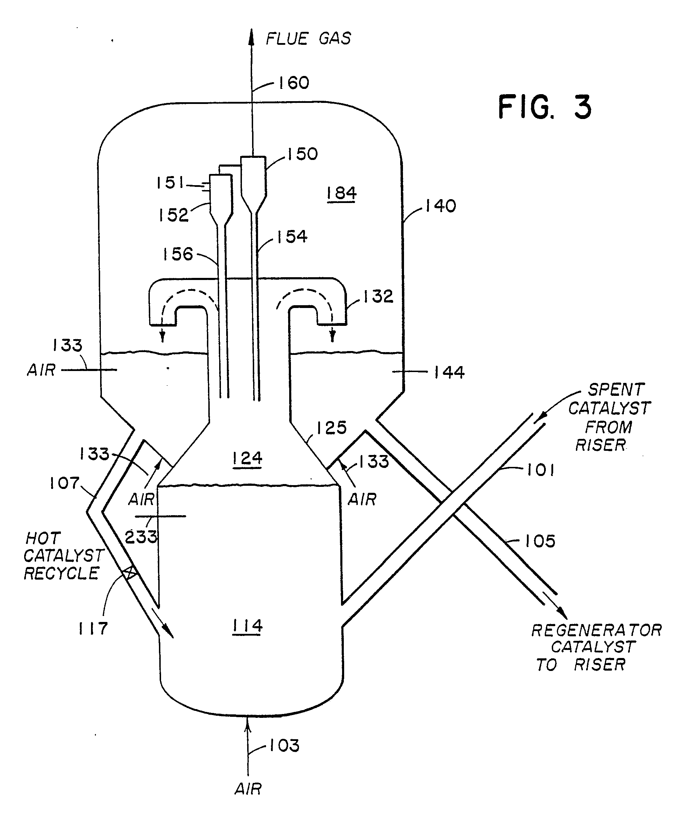

Referring to Figure 3, the multi-stage regenerator shown includes a first dense bed coke combuster 114, a dilute phase transport riser 124, and a second dense bed 144 for collection of regenerated catalyst. Spent catalyst from an FCC reactor is charged via line 101 to the coke combustor 114, which also receives combustion air via line 103. Hot recycled catalyst is preferably added via line 107 and flow control means 117 to promote rapid combustion of coke into carbon monoxide. In lieu of, or as a supplement to, hot catalyst recycle via line 107 preheating of air or of spent catalyst in line 101 will increase the temperature in

5

coke combuster 14 to promote rapid coke combustion.

Catalyst accumulates in combustor 114 and as it reaches the upper limits of combustor 114 catalyst enters the dilute phase transport riser 124. The narrowed cross-sectional area available for fluid flow increases the vertical gas velocity, resulting in a transition from dense phase operation to dilute phase operation in the transport riser. Most of the CO combustion to $CO_2$, also known as afterburning, occurs in the dilute phase transport riser. Additional oxygen-containing gas, preferably air, may be added to dilute phase transport riser 124 by means not shown in the drawing. Addition of more air to the transport riser, and less to combustor 114, will promote CO afterburning in the transport riser, and create a more reducing atmosphere in combustor 114.

Regenerated catalyst exits the transport riser via outlet 132 and is collected in the second dense bed 144. Hot regenerated catalyst is recycled to the FCC reactor via line 105 while another portion of hot regenerated catalyst is preferably recycled via line 107 to the combustor 114. Preferably, additional combustion air is added to the second dense bed 144 via air inlets 133. the additional air helps remove the last traces of coke that may be on the catalyst, and also creates a more oxidizing atmosphere which promotes combustion of CO to $CO_2$.

Flue gas and catalyst fines are removed from the upper containment vessel 140 of the bed 144 via two stages of cyclone separators which remove catalyst fines from flue gas. Flue gas enters primary cyclone 152 via inlet 151, and catalyst fines are discharged via dipleg 156 into transport riser 124. Exhaust gas from the primary cyclone 152 enters a secondary cyclone 150, where additional catalyst fines are recovered and discharged via dipleg 154 into the riser 124. Flue gas, substantially free of catalyst fines and promoter, is removed via line 160.

Operating conditions in the combustor 114 are as follows:

| | Suitable | Preferred | Most Preferred |
|---|---|---|---|
| Temperature °C | 590 to 925 | 650 to 760 | 660 to 730 |
| Pressure, atm | 1 to 10 | 1 to 5 | 3 to 4.5 |
| (kPa) | (100 to 1000) | (100 to 500) | (300 to 450) |
| Air/Coke g/g | 5 to 25 | 10 to 20 | 12 to 17 |
| Stoichiometric Air Added, % | 50 to 120 | 75 to 110 | 80 to 105 |
| Average Catalyst Size, Microns | 30 to 200 | 40 to 100 | 50 to 80 |
| Recycled/Spent Catalyst | .05 to 2.0 | 0.1 to 1.0 | 0.15 to 0.7 |
| %Coke on Spent Catalyst | .2 to 2.0 | 0.3 to 1.5 | 0.3 to 1.0 |
| wr% Coke on Catalyst Leaving Combustor | 0 to 0.7 | 0.01 to 0.3 | 0.01 to 0.2 |

In the dilute phase transport riser 124, the conditions are

| Conditions | Acceptable | Preferred | Most Preferred |
|---|---|---|---|
| Temperature | 590-925 | 650-760 | 660-730 |
| Density g/cc | 0.008-0.16 | 0.016-0.080 | 0.032-0.064 |
| Catalyst Vertical Velocity | | | |
| m/s | 0.15-6.0 | 0.15-4.5 | 0.15-3.0 |
| % CO Combustion | 50-100 | 70-100 | 90-100 |
| % Air Addition | 0-100 | 0-40 | 0-20 |
| % Coke on catalyst at riser outlet | 0-0.7 | 0.01-0.3 | 0.01-0.2 |
| Mole % CO, inlet | 0-10 | 0-5 | 0-3 |
| Mole % CO, outlet | 0-5 | 0-3 | 0-2 |

In the dilute phase transport riser 124 a small amount of additional coke is removed from the catalyst, but that is not the primary purpose of transport riser 124. Preferably, enough additional air is added to the transport riser, or is present in gases leaving the coke combustor, to complete combustion of CO to $CO_2$ within the dilute phase of the transport riser. Ideally, enough CO combustion promoter is preferentially added to the dilute phase transport riser to rapidly convert all of the CO to $CO_2$ before the catalyst and gases exit the riser.

In the second dense bed 144, the conditions are

6

| Conditions | Acceptable | Preferred | Most Preferred |
|---|---|---|---|
| Temperature | 590-925 | 650-760 | 660-730 |
| Density g/cc | .0.16-0.96 | 0.32-0.80 | 0.64 |

Very little combustion occurs here, so little CO combustion or coke removal occurs. The second dense bed 144 serves to clean up the FCC catalyst. There is almost no water of combustion, or residual steam from steam stripping, so little hydrothermal deactivation occurs. Most of the coke and $NO_x$ precursors have already been removed, so severe regeneration conditions can be used to remove residual coke without forming much $NO_x$.

In the dilute phase above second dense bed 144, the conditions are

| Conditions | Acceptable | Preferred | Most Preferred |
|---|---|---|---|
| Temperature | 590-925 | 650-760 | 660-730 |
| Mole % $O_2$ | 0-20 | 0-10 | 0-5 |
| % CO Combustion | 50-100 | 70-100 | 90-100 |
| Density g/cc | 0.00016-0.16 | 0.0016-0.032 | 0.0016-0.016 |

Although it is possible to operate with only a single cyclone separator discharging catalyst fines rich in CO combustion promoter into the dilute phase transport riser 124, operation with at least two stages of cyclones separation, as shown in the drawing, is preferred. Depending on plant conditions, it may be most cost efficient to allow the primary cyclone to discharge directly into the second dense bed 144, while the second stage cyclone discharges into dilute phase transport riser 124. Although not shown in the drawing, the diplegs of the cyclones discharging into the dilute phase transport riser 124 preferably have flapper valves, seal pots or other means which prevent reverse flow of gas of the diplegs of the cyclones. The diplegs also may discharge into catalyst distributors, such as trough and weir distributors to promote better mixing of promoter rich fines with CO rich gas in the dilute phase transport riser 124.

Although the cyclone diplegs discharge directly down into transport riser 124, in practice it may be easier to connect the diplegs to the sides or to transition section 125. Such an approach keeps the diplegs out of the severe erosive environment present in the fully developed dilute phase flow in the upper portions of the dilute phase transport riser, and minimizes to some extent the problems of back flow up the dipleg.

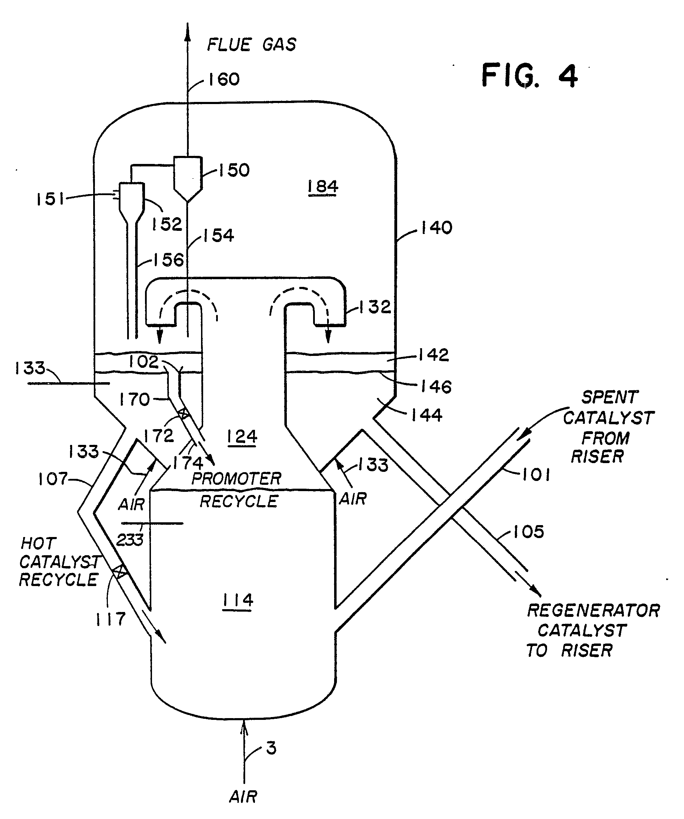

Figure 4 shows a modification of the embodiment of Figure 3 in which there is recycle of CO combustion promoter to the dilute phase transport riser 124. In the Figure 4 embodiment, conventional cyclones are used, but the CO combustion promoter is present as a relatively low density (floating) material which congregates in the upper portion 142 of dense bed 144. The floating CO combustion promoter is preferentially removed from the second dense bed via funnel 102, line 170, and flow control means 172 and discharged via line 174 into the dilute phase transport riser 124. The primary and secondary cyclones 152 and 150 respectively operate in a more conventional manner in that they merely return catalyst fines, and any floating CO combustion promoter present, to the second dense bed 144.

Preferably, the floating CO promoter is a relatively large size, strong, and light material which readily segregates to form a relatively low density dense bed 142, forming an interface 146 with relatively heavier dense bed 144.

The bulk physical properties of the preferred low density floating CO combustion promoter are
Broad
0.1 - 0.7 $g/cm^3$
0.25 - 3.5 cm diameter
Preferred
0.3 - 0.6 $g/cm^3$
0.75 - 2.5 cm diameter

The recycle of the CO promoter-rich upper portion of the second dense bed to the transport riser permits coke combustor 114 to operate relatively lean in CO combustion promoter, resulting in a reducing atmosphere in coke combustor 114. This promotes reduction of $NO_x$ formed in CO combustor 114 to nitrogen.

Although not shown in the drawing, it is possible to provide reverse flow of CO promoter, from the top of the dense bed in combustor 114 to the top of the second dense bed 142. This can be achieved by mounting an inverted funnel in the upper portion of combustor 14, to withdraw catalyst and CO promoter, which can then be discharged, using a lift gas, into, or above, the second dense bed.

The "minimum inventory" FCC regenerators as shown in Figs. 3 and 4 make less $NO_x$ than conventional single bed regenerators. These $NO_x$ emissions are significantly reduced by selective addition of CO combustion promoter to the dilute phase transport riser. Even further reductions are possible, where very $NO_x$ emission limits must be met. This can be achieved by tolerating a significant amount of afterburning within the dilute phase space 184 above the bed 144. Such afterburning will result in higher temperatures of the CO promoter-rich additive. This "super-heated" additive will be very efficient at promoting CO combustion within the dilute phase transport riser and will reduce slightly the average temperature of the FCC catalyst inventory in the regenerator. The benefits of this regime of operation is most apparent in reference to Figure 4, i.e., coke combustor 114 could be operated with perhaps only 50 to 90% of the total air needed to completely burn all of the coke on the catalyst to carbon dioxide. Conditions in second dense bed 144, and the amount of air added to the second dense bed via line 133, may be adjusted so that the desired coke burn is obtained, while leaving a significant amount of CO present in the flue gas. This CO can be completely combusted to $CO_2$ in region 142, a region characterized by a bed of relatively low density floating particles containing CO combustion promoter. Complete CO combustion can occur here, resulting in very high temperatures which could be deleterious to normal FCC cracking catalyst but need not damage CO combustion catalyst. The heat of CO combustion would be transferred to the floating CO combustion promoter contained in region 142, and this material recycled via funnel 102 and lines 170 and 174 into the dilute phase transport riser for heat recovery by direct contact heat exchange with the FCC catalyst.

The operation discussed immediately above permits optimization of each part of the FCC regenerator. Coke combustor 114 can be viewed as a carbon monoxide generator which removes most of the coke from the catalyst, but need not remove all of it. Completion of coke removal, and complete CO combustion, will usually occur in transport riser 124.

Second dense bed 144 can be used to reduce the amount of coke from catalyst to the desired level for regenerated catalyst, but need not achieve complete combustion of CO to $CO_2$. Floating dense bed 142, and to a lesser extent the dilute phase above it, may function to remove substantially all of the carbon monoxide from the flue gas. Conditions in bed 142, and in the dilute phase, can be optimized solely for maximum CO combustion. Conditions of very high temperature and high oxygen concentration can be easily tolerated as the floating CO combustion material need not have any FCC cracking activity. Other benefits flow from such an operation, namely, that the average temperature of the FCC catalyst spends in a relatively steam rich atmosphere at high temperature is also reduced. This is because coke combustor 114 will form most of the $H_2O$ that is going to form in the regenerator. $H_2O$ of combustion formed in combustor 114 will not enter second dense bed 144. The temperature in second dense bed 144 will be higher than in combustor 114, but most of the hydrocarbonaceous coke will have been removed from the catalyst prior to its entry into dense bed 144, so further combustion occurring therein will not lead to formation of $H_2O$. This should lead to a significant increase in FCC catalyst life.

## Example

This Example is based on a commercial FCC regenerator, similar to the one shown in Fig. 1, computer simulations and estimates. Two extreme modes of operation whould be considered:

The FCC reactor operating conditions were:

Top temperature 970° (520°C)
Combined Feed Ratio 1.05
Catalyst to oil ratio 5.0
Reactor pressure 28 psig(294 kPa)
Conversion 60 vol %

The feed contained 1600 ppm nitrogen. The FCC regenerator operated with an average dense bed temperature of 1280°F(693°C). There was 1.0 volume % $O_2$ in the regenerator flue gas.

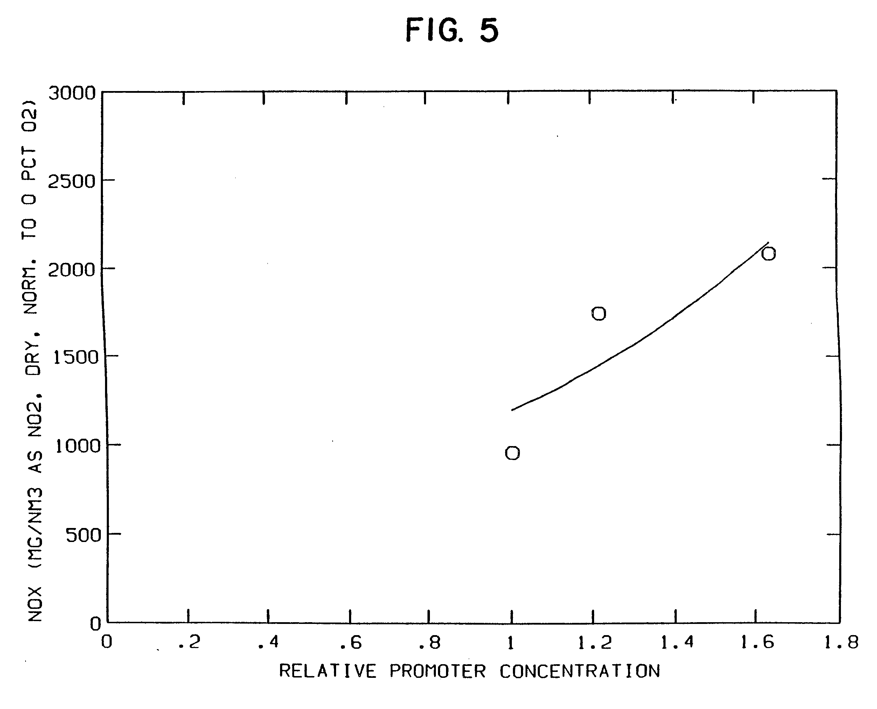

Tests were conducted in a commercial FCC unit, operating with a single dense of catalyst in the regenerator. The CO combustion catalyst was uniformly distributed within the regenerator. The flue gas contained 2100 mg/Nm$^3$ of $NO_x$, 70 ppm CO, 1.0 mole % $O_2$ at 7 ppm Pt on catalyst. Other tests were conducted with different levels of Pt, to generate the data represented by Figure 5.

Figure 5 shows how $NO_x$ content of the flue gas depends on Pt concentration in the dense bed. By segregating the Pt in the top of the dense bed, by using catalyst fines with Pt, or floating Pt impregnated particles, the Pt content in the portion of the bed where the $NO_x$ is formed will approach 0 and, according to the graph, $NO_x$ emmission will decrease. For example, reducing the Pt content in the bottom of the bed from 7 ppm to 3 ppm will decrease $NO_x$ from 2100 mg/$Nm^3$ to 900 mg/$Nm^3$. By segregating the Pt in the top of the bed, almost complete CO combustion can be maintained while keeping the $NO_x$ levels at a low level. Assuming the initial situation where 100% of the CO combustion promoter was maintained in the upper 10% of the FCC regenerator shown in Figure 1, it is estimated that the flue gas $NO_x$ concentration will be less than 750 mg/$Nm^3$, probably about 500 mg/$Nm^3$.

## Claims

1. A fluidized combustion process for removing coke from a particulate material comprising the steps of:

   a) fluidizing the particulate material in a first zone and a second zone;

   b) burning coke on the particulate material in the first zone to produce a combustion gas containing CO, the conditions in the first zone being such that the CO can convert $NO_x$ in the combustion gas to nitrogen; and

   c) passing the combustion gas from the first zone to the second zone and selectively providing a CO combustion promoter in the second zone to convert CO to $CO_2$.

2. The process of claim 1 wherein the second zone is less dense than, and is positioned above, the first zone.

3. The process of claim 1 or claim 2 wherein the first and second zones are defined by lower and upper portions respectively of a single, fluidized bed.

4. The process of claim 1 or claim 2 wherein the first zone is a first fluidized bed and the second zone is riser connecting the first bed to a second fluidized bed located above the first bed.

5. The process of claim 3 or claim 4 wherein the CO combustion promotor is introduced on a particulate support having a smaller particle size than said particulate material.

6. The process of claim 3 or claim 4 wherein the CO combustion promoter is introduced on a particulate support having a lower density than said particulate material.

7. The process of any preceding claim wherein 60 - 90% by weight of the CO combustion promoter is provided in the second zone.

8. The process of any preceding claim wherein oxygen-containing gas is introduced into each of said first and second zones.

9. The process of any preceding claim wherein the particulate material is a catalyst which has been employed to crack a hydrocarbon feedstock in a fluidized catalytic cracking unit and the first and second zones form respective parts of the regenerator of the unit.

10. The process of claim 9 wherein the combustion promoter conbines 0.01 - 100 wt. ppm platinum, calculated on the basis of total catalyst inventory.

FIG. 1

FIG. 2

EP 0 303 393 A1

FIG. 3

FLUE GAS

FIG. 4

SPENT CATALYST FROM RISER

REGENERATOR CATALYST TO RISER

PROMOTER RECYCLE

HOT CATALYST RECYCLE

AIR

AIR

AIR

FIG. 5

EP 0 303 393 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | US-A-4 313 848 (SCOTT)<br>* Claims 1,6; column 3, line 22 - column 4, line 24; column 5, lines 46-51; column 7, lines 8-25; column 8, line 28 - column 9, line 27 *<br>----- | 1,2,3,5,8,9,10 | C 10 G 11/18 |

TECHNICAL FIELDS
SEARCHED (Int. Cl.4)

C 10 G
B 01 J

The present search report has been drawn up for all claims

| Place of search | Date of completion of the search | Examiner |
|---|---|---|
| THE HAGUE | 13-10-1988 | DE HERDT O.C.E. |